(19) Europäisches Patentamt European Patent Office Office européen des brevets

(11) **EP 3 670 262 A1**

(12) **EUROPEAN PATENT APPLICATION**

(43) Date of publication:
24.06.2020 Bulletin 2020/26

(51) Int Cl.:
*B60Q 1/08* *(2006.01)*

(21) Application number: 18214121.8

(22) Date of filing: 19.12.2018

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Valeo Vision
93012 Bobigny Cedex (FR)

(72) Inventors:
• KANJ, Ali
93012 BOBIGNY Cedex (FR)
• PELLARIN, Marie
93012 BOBIGNY Cedex (FR)
• SANCHEZ, Vanesa
93012 BOBIGNY Cedex (FR)

(74) Representative: Valeo Vision
IP Department
34, rue Saint André
93012 Bobigny (FR)

(54) **METHOD FOR CORRECTING A LIGHT PATTERN AND AUTOMOTIVE LIGHTING DEVICE ASSEMBLY**

(57)  The invention is related to a method for correcting a light pattern provided by a first lighting device (1) and a second lighting device (2). The first lighting device (1) projects a first light pattern (11) and the second lighting device (2) projects a second light pattern (12). There is an overlapping zone (4) between the first light pattern (11) and the second light pattern (12). The method comprises the steps of, for each lighting device (1, 2), dividing the light sources in groups, each group being associated to a projection distance, calculating an overlapping region as a function of the projection distance, calculating a number of affected light sources for each group as a function of a representative dimension of the overlapping region and attenuate the intensity of the light emitted by the affected light sources in each group. The invention also provides an automotive lighting device assembly with control means to perform the steps of this method.

**Fig. 1**

**(Cont. next page)**

Fig. 8

**Description**

**TECHNICAL FIELD**

This invention is related to the field of automotive lighting devices, and more particularly, to the way light patterns are managed when the light pattern projected by two lighting devices generate an overlapping section.

**STATE OF THE ART**

Digital lighting devices are being increasingly adopted by car makers for middle and high market products.

These products can be distinguished by a higher resolution with respect to the old lighting technologies. But these lighting elements may lead to some technical issues, which are more visible with high definition projections and requires a controlled solution, such as "optical butting" problem.

When different beams coming from different light modules intersect on the road, the overlapped area is differently exposed than the rest of the zones, which do not suffer this overlapping. This situation causes a zone with saturated illumination and the corresponding lack of homogeneity between the different beams. This overlapping zone usually has a triangular shape with respect to the distance of projection. This effect is commonly known as "optical butting effect".

Solutions are often focused on avoid glaring on pedestrians or other vehicles, but no solution is known to face this problem.

**SUMMARY OF THE INVENTION**

The invention provides an alternative solution for this optical butting effect by a method for correcting a light pattern according to claim 1 and an automotive lighting device according to claim 10. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method for correcting a light pattern provided by a first lighting device and a second lighting device, wherein

the first lighting device comprises a plurality of light sources and projects a first light pattern;
the second lighting device comprises a plurality of light sources and projects a second light pattern; and
there is an overlapping zone between the first light pattern and the second light pattern,

wherein the method comprises the steps of

for each lighting device, dividing the light sources in groups, each group being associated to a projection distance,
calculating an overlapping region as a function of the projection distance;
calculating a number of affected light sources for each group as a function of a representative dimension of the overlapping region;
attenuate the intensity of the light emitted by the affected light sources in each group.

The position of the affected light sources is calculated in several steps. Firstly, an overlapping zone is estimated. The contribution of each group of light sources is classified depending on the projection distance that this group of light sources performs. For example, in a lighting device, some light sources aim to project light in 10-20 m from the lighting device, other group aims to project light in 20-30 m and other group on 30-50 m. Secondly, the region of overlapping is divided accordingly: a first zone from 10 to 20 m from the lighting device, another zone from 20 to 30 m from the lighting device and a final zone from 30 to 50 m from the lighting device. For each zone (i.e., for each group of light sources), the size of the overlapping region is used to calculate how many light sources are associated to this overlapping region at this projection distance. Finally, the intensity of these affected light sources is attenuated in every group of both lighting devices. The attenuation of the intensity of the affected light sources aims to correct or even solve the problem of overlapping.

In some particular embodiments of this method, the step of attenuation is symmetrical in both lighting devices.

When the contribution to the overlapping zone is symmetrical in both lighting devices, a single calculation may be made, and then be applied symmetrically to the affected light sources of both projectors.

In some particular embodiments of this method, the step of attenuation comprises attenuating the luminous intensity to the 50% in all the affected light sources.

Since the nominal luminous intensity is 100%, the overlapping will be solved if, for each overlapping region, each lighting device contributes with the 50% of the nominal luminous intensity. The sum of the intensities of both lighting devices will be 100% without any excess of luminosity.

In some particular embodiments of this method,

the step of calculating a region of overlapping comprises calculating an angle of overlapping in each lighting device as a function of the projection distance; and

the step of calculating a number of affected light sources comprises calculating a number of affected light sources for each group as a function of the angle of overlapping.

Since the lighting devices usually projects a triangular beam, which causes a triangular overlapping zone, the angle of overlapping is a useful magnitude. In each light group, each light source corresponds to an angle range, so that when the overlapping angle is calculated, the number of affected light sources in each group is easily obtained.

In some particular embodiments of this method, each group of light sources comprises more than one column of light sources, in such a way that each column is associated to an angle range, so that for a given angle, a number of columns are associated to this angle in each group.

In some particular embodiments of this method,

each lighting device comprises a matrix arrangement of solid-state light sources, with columns and rows;

the step of dividing the solid-state light sources in groups comprising dividing the rows into groups of rows, so that each group of rows correspond to a range of projection distance;

the step of attenuation comprises attenuate all the affected light sources of each group with the same attenuation percentage.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the life span of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

A matrix arrangement is a typical example for this method. The rows may be grouped in projecting distance ranges and each column of each group represent an angle interval. This angle value depends on the resolution of the matrix arrangement, which is typically comprised between 0.01° per column and 0.5° per column. As a consequence, when the overlapping angle is calculated, the number of affected columns is very easy to obtain. E. g., in a matrix with a resolution of 0.1° per column, if the overlapping angle for a particular group is 2.5°, 25 columns of this group will be affected, and then dimmed.

In some particular embodiments, the method further comprises the step of performing a linear interpolation in the calculation of the affected light sources for each row.

If a group comprises several rows, instead of actuating on all the light sources of the columns, a linear interpolation between groups may be made: if one group has 10 rows and, after the calculation, has 10 columns of affected light sources, and the adjacent one has 20 columns affected, instead of having 10 rows of 10 light sources and then 10 rows of 20 light sources, a linear interpolation may be adopted between the 20 rows of both groups.

In some particular embodiments, the method further comprises the step of capping the number of affected light sources for the groups of rows which has a projection distance which is infinite.

Due to the pitch angle of the lighting devices, there are some rows which project to the infinite (pitch angle = 0°) or even higher (pitch angle > 0°). For those rows, there is no need of following a linear progression, since all the rows above the row which projects in 0° will have the same number of affected light sources.

In some particular embodiments, the method further comprises the step of applying a dithering operation on the affected light sources.

A dithering operation may be advantageous to obtain a more homogeneous combined light pattern.

In a second inventive aspect, the invention provides an automotive lighting device assembly comprising a first lighting device and a second lighting device, each lighting device comprising

a matrix arrangement of solid-state light sources, intended to provide a light pattern;

control means for accomplishing the steps of the method according to any of the preceding claims.

This lighting device assembly solves the problem of the overlapping region between the two lighting devices.

In some particular embodiments, the matrix arrangement comprises at least 2000 solid-state light sources.

## BRIEF LIST OF DRAWINGS AND REFERENCE NUMBERS

[0030] To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

> Figure 1 shows a general perspective view of an automotive lighting device assembly according to the invention.
>
> Figure 2 shows a closer view of one of the lighting devices of a particular embodiment of a lighting device assembly according to the invention.
>
> Figure 3 shows a map of the overlapping zone and the relation with the projecting distance in an automotive lighting device assembly according to the invention.
>
> Figure 4 shows how to obtain geometric parameters for a method according to the invention.
>
> Figures 5 to 8 show examples of embodiments of a method according to the invention.

Elements of the example embodiments are consistently denoted by the same reference numerals throughout the drawings and detailed description where appropriate:

| | |
|---|---|
| 1 | First lighting device |
| 11 | First light pattern of the first lighting device |
| 2 | Second lighting device |
| 12 | Second light pattern of the second lighting device |
| 3 | LED |
| 31 | First group of LEDs |
| 32 | Second group of LEDs |
| 33 | Third group of LEDs |
| 34 | Fourth group of LEDs |
| 35 | Fifth group of LEDs |
| 4 | Overlapping zone |
| 100 | Automotive vehicle |

**DETAILED DESCRIPTION OF THE INVENTION**

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

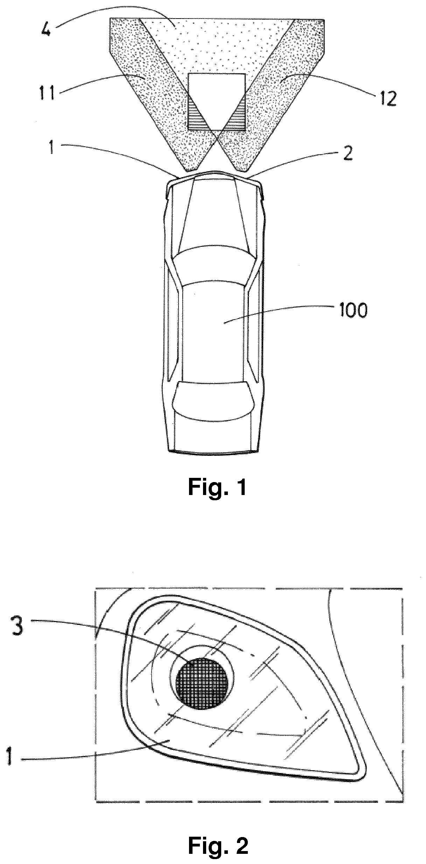

Figure 1 shows a general perspective view of an automotive lighting device assembly according to the invention.

This lighting device assembly is installed in an automotive vehicle 100 and comprises a first lighting device 1 and a second lighting device 2.

Each lighting device 1, 2 comprises

> a matrix arrangement of LEDs, intended to provide a light pattern;
> control means for controlling the intensity of each LED, to perform lighting functions and, particularly, to control the intensity in the overlapping zone between the two lighting devices.

As may be seen in this figure, the first lighting device 1 projects a first light pattern 11 and the second lighting device 2 projects a second light pattern 12. These two light patterns 11, 12 create an overlapping zone 4, where the luminous intensity of both patterns is summed. Hence, if no method was performed to solve this problem, the intensity in this overlapping zone would be 200%, compared to the 100% in the rest of the light patterns.

This matrix configuration is a high-resolution module, having a resolution greater than 1000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixelated light beam by the matrix arrangement. The control centre is thus able to individually control the light emission of each pixel of the matrix arrangement.

Alternatively to what has been presented above, the matrix arrangement may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

Figure 2 shows a closer view of one of the lighting devices of a particular embodiment of a lighting device assembly according to the invention.

As mentioned above, each lighting device (in this figure only first lighting device 1 is represented) comprises a matrix arrangement of LEDs 3, with columns and rows. Each column projects a light beam in a determined angle, and each row projects a light beam in a predetermined projecting distance. As a consequence, each row may be associated to a projecting distance and each column may be associated to an angle range. The difference between rows and between columns depends on the resolution of the matrix arrangement.

The pitch angle of the lighting device will cause that, from a determined row and above, the projecting distance is infinite, because the beam will be projected parallel to the road or even with a positive angle.

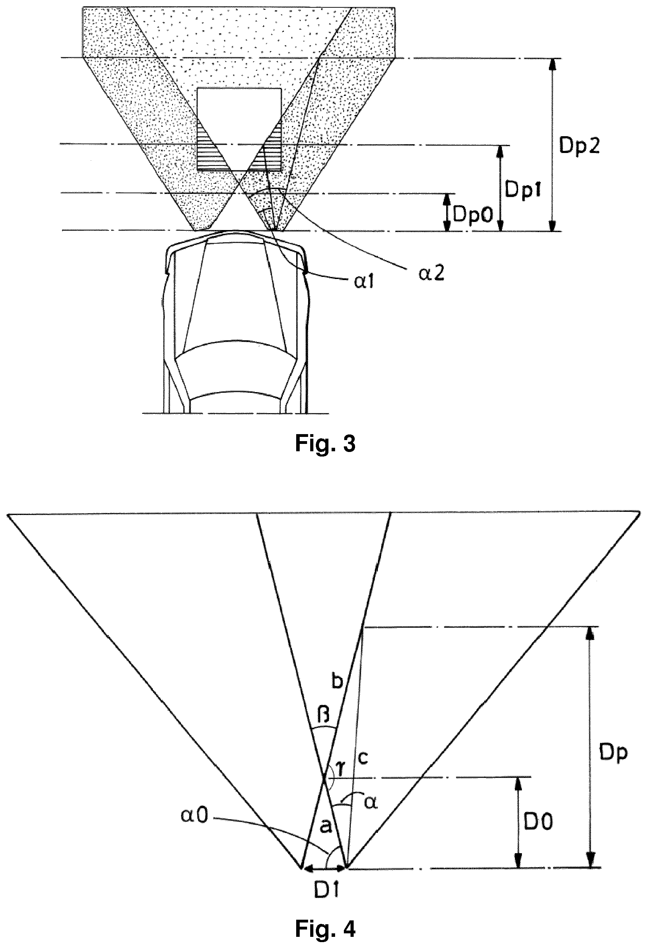

Figure 3 shows a map of the overlapping zone and the relation with the projecting distance. For each projecting distance, which are labelled as Dp0, Dp1, Dp2, etc, the overlapping zone varies, and the angle of the light pattern which is affected by the overlapping zone varies as well.

For example, for Dp0, there is no overlapping zone, so the rows of LEDs which project light at this distance or at a lower distance will not be affected by the correction defined by the method of the invention. For Dp1, there is an overlapping zone with an overlapping angle $\alpha1$, and for Dp2, there is an overlapping zone with an overlapping angle $\alpha2$. Of course, only three projecting distances have been analysed in this figure, but the method of the invention may analyse any number of different projecting distances, depending on the accuracy that is required.

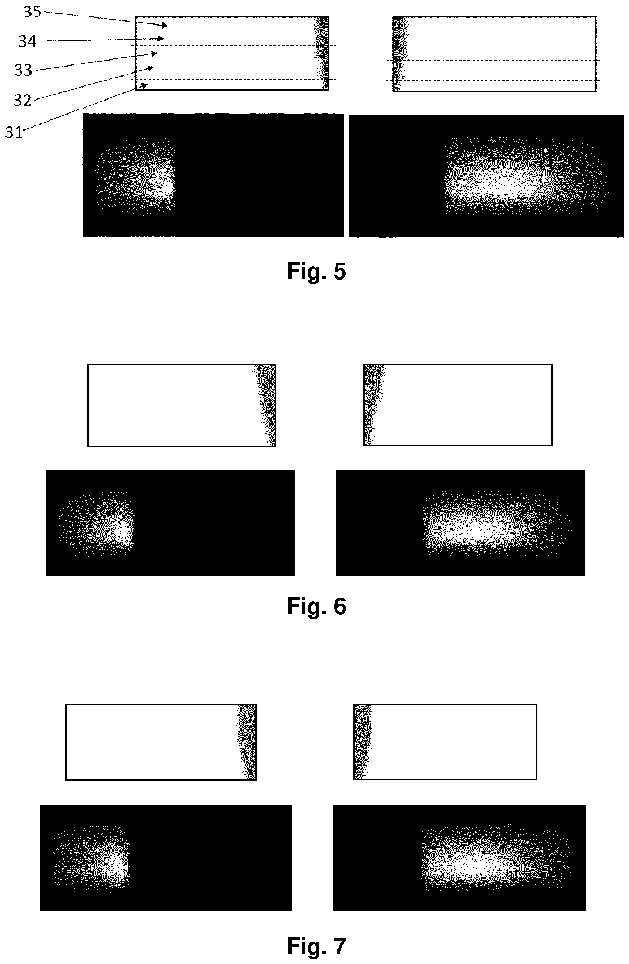

This angle $\alpha$ may be obtained as a function of some geometric parameters, as will be shown in figure 4. Once this angle $\alpha$ is calculated as a function of the projecting distance Dp, the method of the invention comprises dimming the luminous intensity of some affected light sources in each row to mitigate or even solve the problem of the overlapping zone. As each row defines a projection distance and, for each row, each column defines an angle range, it is straightforward to assign the affected light sources in each row. Figures 5 to 8 will develop more detailed examples of choosing these affected light sources.

Figure 4 shows how to obtain the angle $\alpha$ as a function of the projecting distance Dp and other geometric parameters.

As may be seen in this figure, the two lighting devices are separated at a distance D1, and both of them project a symmetric light pattern which has an inner angle $\alpha_0$. For a projecting distance Dp1, there is an overlapping zone 4 which defines a side b in a triangle a-b-c, where a is the distance between one of the lighting devices and the point where the overlapping zone 4 starts and c is the distance between the same lighting device and the most outer point where the overlapping zone 4 finishes.

Using conventional geometric relations, it may be shown that the three sides of the triangle may be expressed as a function of the initial data and the projecting distance Dp.

$$a = \frac{D_1}{2cos\alpha_0}$$

$$b = \frac{Dp - D_0}{cos\left(\frac{\beta}{2}\right)}$$

$$c = \sqrt{a^2 + b^2 - 2abcos\gamma}$$

And the angle $\alpha$, using the Al-Kashi theorem, may be expressed as a function of these three sides:

$$\alpha = cos^{-1}\left(\frac{a^2 + c^2 - b^2}{2ac}\right)$$

Once this angle is calculated as a function of the projecting distance, figures 5, 6 and 7 will show particular examples of choosing the affected light sources in each row.

Figure 5 shows a first example of the attenuation steps of a method according to the invention.

In this figure, the rows have been grouped into row groups, so that each row group is associated to a range of projecting distance. For the sake of convenience, in this example, five groups are defined: a first group of rows 31 from 0 to 20 m of projecting distance, a second group of rows 32 from 20 to 40 m of projecting distance, a third group or rows 33 from 40 m to 60 m of projecting distance, a fourth group of rows 34 from 60 m to infinite and a fifth group of rows 35 which projects in a positive angle with respect of the plane of the road.

In this example, when calculating $\alpha$ as a function of the projecting distance, 1° corresponds to 20 m of projecting distance, 2° corresponds to 40 m of projecting distance and 3° corresponds to 60 m of projecting distance. The resolution of the matrix is 0.2° per column.

Hence, in the first group, the range includes the projecting distance for 1°, so 5 columns (each column corresponds to 0.2°, so to reach 1°, 5 columns are necessary) will be affected. In the second group, which includes the projection distance for 2°, 10 columns will be affected, and in the third group, which includes the projection distance for 3°, 15 columns will be affected. In the fourth and fifth groups, 15 columns will be affected as well, since 4° is a value which is not reached with this configuration.

In the affected light sources, light intensity is attenuated to the 50%, so that the sum of the intensities of both light devices will sum 100% for the overlapping region.

Figure 6 shows a second example of such a method.

In this case, a linear interpolation is carried out row by row, starting from the results of the method illustrated in the previous figure.

Figure 7 shows a third example of such a method.

In this case, starting from the results of the method illustrated in the previous figure, the number of affected light sources for the rows comprised in the fourth and fifth groups have been capped, since in these groups there is no need of dimming more light sources than in the rows of the third group.

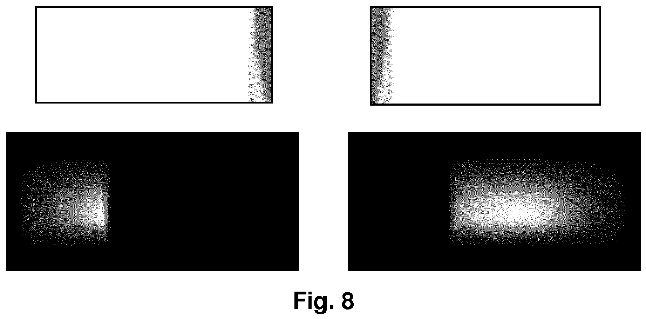

Figure 8 shows a fourth example of such a method.

In this case, starting from the results of the method illustrated in the previous figure a dithering operation is applied on the affected light sources, to achieve a more homogeneous beam. In this case, the attenuation is not constant for every affected light source, but is symmetric with respect to both lighting devices.

**Claims**

1. Method for correcting a light pattern provided by a first lighting device (1) and a second lighting device (2), wherein

   the first lighting device (1) comprises a plurality of light sources (3) and projects a first light pattern (11);
   the second lighting device (2) comprises a plurality of light sources (3) and projects a second light pattern (12); and
   there is an overlapping zone (4) between the first light pattern (11) and the second light pattern (12),

   wherein the method comprises the steps of

   for each lighting device (1, 2), dividing the light sources in groups, each group being associated to a projection distance,
   calculating an overlapping region as a function of the projection distance (Dp);
   calculating a number of affected light sources for each group as a function of a representative dimension of the overlapping region;
   attenuate the intensity of the light emitted by the affected light sources in each group.

2. Method according to claim 1, wherein the step of attenuation is symmetrical in both lighting devices (1, 2).

3. Method according to any of the preceding claims, wherein the step of attenuation comprises attenuating the luminous intensity to the 50% in all the affected light sources (3).

4. Method according to any of the preceding claims, wherein

> the step of calculating a region of overlapping comprises calculating an angle of overlapping (a) in each lighting device as a function of the projection distance (Dp); and
> the step of calculating a number of affected light sources comprises calculating a number of affected light sources for each group as a function of the angle of overlapping (a).

5. Method according to claim 4, wherein each group of light sources comprises more than one column of light sources, in such a way that each column is associated to an angle range, so that for a given angle, a number of columns are associated to this angle in each group.

6. Method according to claims 4 or 5, wherein

> each lighting device comprises a matrix arrangement of solid-state light sources (3), with columns and rows;
> the step of dividing the solid-state light sources (3) in groups comprising dividing the rows into groups of rows, so that each group of rows correspond to a range of projection distance (Dp);
> the step of attenuation comprises attenuate all the affected light sources of each group with the same attenuation percentage.

7. Method according to claim 6, further comprising the step of performing a linear interpolation in the calculation of the affected light sources for each row.

8. Method according to claim 7, further comprising the step of capping the number of affected light sources for the groups of rows which has a projection distance which is infinite.

9. Method according to any of claims 6 to 8, further comprising the step of applying a dithering operation on the affected light sources.

10. Automotive lighting device assembly comprising a first lighting device and a second lighting device, each lighting device comprising

> a matrix arrangement of solid-state light sources (3), intended to provide a light pattern (11, 12);
> control means for accomplishing the steps of the method according to any of the preceding claims.

11. Automotive lighting device assembly according to claim 10, wherein the matrix arrangement comprises at least 2000 solid-state light sources (3).

**Fig. 1**

**Fig. 2**

**Fig. 3**

**Fig. 4**

**Fig. 5**

**Fig. 6**

**Fig. 7**

Fig. 8

Europäisches
Patentamt

European
Patent Office

Office européen
des brevets

# EUROPEAN SEARCH REPORT

Application Number

EP 18 21 4121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2016 122499 A1 (HELLA GMBH & CO KGAA [DE]) 24 May 2018 (2018-05-24) * paragraphs [0014] - [0085]; figures 1-5 * | 1-8,10,11 | INV. B60Q1/08 |
| X | WO 2015/193714 A1 (TOYOTA MOTOR CO LTD [JP]) 23 December 2015 (2015-12-23) * paragraph [0051]; figures 1-4 * | 1-8,10,11 | |
| X | DE 10 2013 114264 A1 (HELLA KGAA HUECK & CO [DE]) 16 July 2015 (2015-07-16) * paragraphs [0005], [0023] - [0030]; figures 1-3 * | 1-8,10,11 | |
| A | DE 10 2016 122492 A1 (HELLA GMBH & CO KGAA [DE]) 24 May 2018 (2018-05-24) * paragraph [0054]; figures 1-4 * | 7 | |
| A | US 2016/347237 A1 (BHAKTA VIKRANT R [US] ET AL) 1 December 2016 (2016-12-01) * paragraph [0025] * | 9 | |
| A | EP 2 979 923 A1 (TOYOTA MOTOR CO LTD [JP]) 3 February 2016 (2016-02-03) * figures 1-12 * | 9 | TECHNICAL FIELDS SEARCHED (IPC) B60Q F21S |
| A | US 2005/225999 A1 (BUCHER LLOYD K [US]) 13 October 2005 (2005-10-13) * figures 3, 4 * | 9 | |
| A | WO 2018/096523 A1 (MAGNA MIRRORS OF AMERICA INC [US]) 31 May 2018 (2018-05-31) * paragraph [0036]; figures 1-5 * | 9 | |

The present search report has been drawn up for all claims

| Place of search | Date of completion of the search | Examiner |
|---|---|---|
| Munich | 19 June 2019 | Sarantopoulos, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 21 4121

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2019

| Patent document cited in search report | Publication date | Patent family member(s) | Publication date |
|---|---|---|---|
| DE 102016122499 A1 | 24-05-2018 | DE 102016122499 A1<br>WO 2018095718 A1 | 24-05-2018<br>31-05-2018 |
| WO 2015193714 A1 | 23-12-2015 | DE 112015002897 T5<br>JP 6219784 B2<br>JP 2016002866 A<br>US 2017129389 A1<br>WO 2015193714 A1 | 16-03-2017<br>25-10-2017<br>12-01-2016<br>11-05-2017<br>23-12-2015 |
| DE 102013114264 A1 | 16-07-2015 | CN 104728733 A<br>DE 102013114264 A1<br>US 2015219298 A1 | 24-06-2015<br>16-07-2015<br>06-08-2015 |
| DE 102016122492 A1 | 24-05-2018 | DE 102016122492 A1<br>WO 2018095716 A1 | 24-05-2018<br>31-05-2018 |
| US 2016347237 A1 | 01-12-2016 | CN 106200219 A<br>US 2016347237 A1 | 07-12-2016<br>01-12-2016 |
| EP 2979923 A1 | 03-02-2016 | CN 105313762 A<br>EP 2979923 A1<br>JP 5955356 B2<br>JP 2016034785 A<br>US 2016033102 A1 | 10-02-2016<br>03-02-2016<br>20-07-2016<br>17-03-2016<br>04-02-2016 |
| US 2005225999 A1 | 13-10-2005 | CA 2562438 A1<br>EP 1735186 A2<br>JP 4971137 B2<br>JP 2007533080 A<br>KR 20070004088 A<br>US 2005225999 A1<br>WO 2005100088 A2 | 27-10-2005<br>27-12-2006<br>11-07-2012<br>15-11-2007<br>05-01-2007<br>13-10-2005<br>27-10-2005 |
| WO 2018096523 A1 | 31-05-2018 | NONE | |

EPO FORM P0459

For more details about this annex : see Official Journal of the European Patent Office, No. 12/82